# EUROPÄISCHE PATENTSCHRIFT

(11) **EP 2 298 846 B1**
(45) Veröffentlichungstag und Bekanntmachung des Hinweises auf die Patenterteilung: **05.04.2017**
(21) Anmeldenummer: 10175510.6
(22) Anmeldetag: 07.09.2010
(51) Int. Cl.: C09J 7/04, C09J 133/06, C09J 133/08

(54) **Klebeband mit einer Klebemasse auf der Basis von Acrylsäureestern**
Adhesive tape with an adhesive based on acrylic acid esters
Bande adhésive avec un adhésif à base d'esters acryliques

(30) Priorität: 18.09.2009 DE 102009041896; 18.12.2009 DE 102009054955
(43) Veröffentlichungstag der Anmeldung: 23.03.2011
(73) Patentinhaber: tesa SE, 22848 Norderstedt (DE)
(72) Erfinder: Böhm, Nicolai, 22559, Hamburg (DE); Sperling, Caroline, 20255, Hamburg (DE); Kerep, Patrick, 22767, Hamburg (DE); Müller, Kai, 20148, Hamburg (DE)

(56) Entgegenhaltungen:
- WO-A1-2008/087113
- US-A- 3 975 570
- US-A- 4 331 718
- Walter Caseri: "physikalische Vernetzung", Römpp online 4.0, 1 December 2007 (2007-12-01), pages 1-4, XP055210892, Retrieved from the Internet: URL:https://roempp.thieme.de/roempp4.0/do/ data/RD-16-02217 [retrieved on 2015-09-02]

## Beschreibung

Die Erfindung betrifft ein Klebeband mit einer Klebemasse auf der Basis von Acrylsäureestern.

Selbstklebende Abdeckbänder, im Folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine ausreichende Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.

Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.

Diese Rohstoffe und Verfahrensschritte sind ausschließlich der Kunst des Papiermachers überlassen und stehen dem Hersteller von Abdeckklebebändern daher nicht zur Verfügung, da dieser im Regelfall das Rohpapier als Basis der Abdeckklebebands zukauft.

Insbesondere die Dehnbarkeit ist aber eine wichtige Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist; das Abdeckklebeband kann bei der Handapplikation weichen Konturen perfekt nachgeführt werden und führt so zu einer sauberen, unterläuferfreien Farbkante. Die dafür erforderliche Dehnung in Längsrichtung liegt bei so genannten Flachkrepps im Bereich von 10 %, bei so genannten Hochkrepps um 50 %. Zugfestigkeit und Dehnung sind so aufeinander abgestimmt, dass es problemlos gelingt, während der manuellen Applikation an der Außenkurve des Abdeckklebebands einen Teil der Dehnung ohne Rissgefahr herauszuziehen und dadurch eine Kurve zu erzeugen.

Neben den dehnbaren Abdeckbändern gibt es auch die so genannten Flatbacks (Papierklebebänder ohne Kreppung), zu denen auch das Japanpapier (auch Washi oder Wagami) zählt. Sie eignen sich aufgrund ihrer geringen Dehnbarkeit von ungefähr 5 % nicht für die Verklebung in Kurven.

Im Folgenden soll auf die nach dem Stand der Technik üblichen Prozesse zur Herstellung von dehnfähigen, bahnförmigen Papierträgern eingegangen werden.

Für Abdeckklebebänder werden üblicherweise als Trägermaterial maschinell gekreppte Papiere eingesetzt, die in der Regel aus 100 % Natronkraft-Zellstoff (NBSK) hergestellt werden. Im so genannten Nasskrepp-Verfahren erfolgt die Kreppung meistens in der Papiermaschine mit Hilfe eines Kreppschabers auf einem so genannten Kreppzylinder entweder innerhalb beziehungsweise am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im Allgemeinen die maximal mögliche Geschwindigkeit der Papiermaschine und verkürzt die Länge der Papierbahn um ca. 10 bis 20 %. Die Falten werden beim anschließenden Trocknungsprozess in wesentlichen durch Ausbildung von Wasserstoffbrückenbindungen fixiert, so dass sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht und so dem jeweiligen Anwendungszweck angepasst werden. Sie wird üblicherweise durch Messen des Kraft-Dehnungs-Diagramms bestimmt. Nach diesem Verfahren lassen sich so genannte Flachkrepps mit Reißdehnungswerten in Längsrichtung von bis zu 20 % erzeugen. Die Dehnung in Querrichtung beträgt im Allgemeinen nicht mehr als ca. 5 %.

Ein weiteres Verfahren zur Herstellung von dehnbaren Papierträgern für Abdeckklebebänder ist das so genannte CLUPAK-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung wie oben beschrieben ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Eine Anschmiegsamkeit von aus solchen Papieren hergestellten Abdeckklebebands an sphärische Oberflächen ist bei manueller Applikation deshalb kaum gegeben. Außerdem wird das Papier bedingt durch das Verfahren in z-Richtung stark verdichtet und nimmt deshalb während der in der Abdeckklebeband-Herstellung üblichen Imprägnierung nur schlecht Dispersionen auf. Üblicherweise werden deshalb für Abdeckklebebänder geleimte Clupak-Träger ohne Imprägnierung eingesetzt. Die erzielten Dehnungen in Längsrichtung liegen ebenfalls bei bis zu 20 %. Zu diesem Verfahren und dem daraus hergestellten Produkt sei auf die DE 38 35 507 A1 verwiesen.

Für die Erzielung sehr hoher Dehnwerte von bis zu etwa 50 % wird neben dem klassischen Nasskreppverfahren, das hierzu mit besonders groben Kreppschabern betrieben wird, auch das Trockenkreppverfahren angewendet. Dabei wird ein glattes Papier auf einer separaten Maschine nach Wiederanfeuchten mit einer Bindemittellösung (Stärke, CMC, PVAI) wie oben beschrieben gekreppt und anschließend erneut getrocknet. Auf beide Weisen erhält man so genannte Hochkrepps, die sich neben der extremen Dehnfähigkeit durch eine große Dicke und eine sehr raue Oberfläche auszeichnen.

Diese bahnförmigen Papierträger bestimmen durch ihre Eigenschaften nicht nur die späteren Anwendungseigenschaften des Abdeckklebebands maßgeblich, sondern diese Eigenschaften sind auch kennzeichnend für und teilweise einschränkend bei der Herstellung derselben.

Aus der DE 101 20 148 A1 ist ein Abdeckklebeband aus einem Trägermaterial und einer darauf zumindest einseitig aufgebrachten Klebebeschichtung bekannt. Das Trägermaterial besteht aus einem ungekreppten bahnförmigen Material, vorzugsweise aus Papier, dessen Reißdehnung durch mechanisches Prägen auf einen Wert zwischen 2 und 70 % eingestellt worden ist.
Die Rautiefe des geprägten Trägermaterials ist in einer ersten vorteilhaften Ausführungsform durch eine Kalandrierung reduziert, ohne die Dehnung des Trägermaterials wesentlich zu beeinträchtigen.

Als Reversibilität wird die rückstands- und reißerfreie Entfernbarkeit nach unterschiedlichen Zeiträumen und auf unterschiedlichen Untergründen verstanden. Dazu maßgeblich ist der Quotient aus der Abzugskraft vom Haftgrund nach der Anwendung und der Klebkraft auf Stahl, die unmittelbar nach dem Aufkleben ermittelt wird und daher ein Maß für die Soforthaftung ist, im Folgenden Aufziehquotient genannt. Je größer der Aufziehquotient, umso schlechter ist die Reversibilität der Klebemasse. Die Klebkraft auf Stahl ist dabei nach unten begrenzt, da das Klebeband auch sofort nach der Applikation eine sichere Haftung gewährleisten muss. Bei einer ungenügenden Reversibilität, das heißt einem hohen Aufziehquotienten, kann beim Abziehen des Klebebandes entweder der Träger reißen, die Klebemasse kohäsiv spalten oder sich durch adhäsives Versagen vom Träger lösen. Aus diesem Grund werden Acrylatklebemassen bevorzugt auf reißfesten Trägermaterialien aus Gewebe oder Folien eingesetzt, die ein reißer- und rückstandsfreies Abziehen gewährleisten.

Imprägnierte Papiere, wie sie standardmäßig als Abdeckklebebänder für Maler und Lackierarbeiten eingesetzt werden, werden - je nach Papiergewicht und Papierfasertyp - bei Abzugskräften ab ca. 5 N/cm bei einem beschleunigten Abziehen reißen (eine ausführliche Beschreibung der zur Bestimmung der genannten Parameter erforderlichen Prüfmethoden erfolgt später).

Hinzu kommt, dass die Träger bei einer Außenanwendung feucht werden können. Die Festigkeit eines feuchten, imprägnierten Papierträgers ist um bis zu 50 % niedriger als im trockenen Zustand, weswegen ein feuchter Papierträger bereits bei niedrigerer Abzugsgeschwindigkeit reißt. Aufgrund ihrer schlechten Reversibilität, besonders auf rauen beziehungsweise mikroskopisch rauen Oberflächen, können Acrylatklebemassen sehr leicht um einen Faktor 2 bis 5 ihrer Anfangsklebkraft ansteigen. Solche rauen oder mikrorauen Haftgründe sind zum Beispiel ältere PVC-Fensterprofile oder Lackierungen, die durch Bewitterung ihre anfängliche Glätte verlieren. Damit sich handelsübliche Papierklebebänder beschichtet mit einer Acrylatklebemasse auch bei feuchten Witterungsbedingungen von mikrorauen Untergründen rückstands- und reißerfrei entfernen lassen, muss die Klebkraft auf Stahl sehr gering (häufig kleiner als 1,5 N/cm) sein, so dass auch nach Aufziehen um den oben erwähnten Faktor die benötigte Abzugskraft zum einen unterhalb der Belastungsgrenze des Papierträgers und zum anderen unterhalb der inneren Festigkeit der Klebmasse selbst liegt. Liegt der Faktor unterhalb von 2, bedeutet dies für die Anwendung, dass sowohl mit einer vergleichbar hohen Klebkraft auf Stahl eine notwendige sichere Verklebung als auch mit einer vergleichbar niedrigen Klebkraft nach der Applikation ein unkompliziertes, reißer- und rückstandsfreies Entfernen gewährleistet werden kann.
Ein weiteres anwendungsrelevantes Kriterium ist eine hohe Anfassklebrigkeit, auch als Tack bezeichnet, weil das Band zum Beispiel bei schwierigen Verklebungsgeometrien schon halten muss, bevor es gut angedrückt wurde. Erfahrungsgemäß ist das ab einem Wert für den Rolling Ball Tack von 100 mm oder kleiner der Fall.

Aufgabe der vorliegenden Erfindung ist es, ein Klebeband zu schaffen, das auch nach längerer Verweilzeit von mikroskopisch rauen Untergründen vollständig reversibel, also einfach, reißer- und rückstandsfrei, entfernt werden kann und das gleichzeitig eine ausreichend hohe Anfangsklebkraft sowie einen guten Tack bietet.

Gelöst wird diese Aufgabe durch ein Klebeband, wie es im Hauptanspruch dargelegt ist. Gegenstand der Unteransprüche sind vorteilhafte Fortbildungen des Erfindungsgegenstandes. Des Weiteren betrifft die Erfindung Verwendungsvorschläge des erfindungsgemäßen Klebebandes.

Demgemäß betrifft die Erfindung ein Klebeband mit einem Papierträger, auf dem einseitig eine Acrylatklebemasse in Form einer getrockneten Polymerdispersion aufgebracht ist, wobei das Acrylatpolymer aus folgenden Monomeren aufgebaut ist:
a) 70 Gew.-% bis 94,9 Gew.-% 2-Ethylhexylacrylat
b) 5 Gew.-% bis 25 Gew.-% Methylmethacrylat
c) 0,1 Gew.-% bis 5 Gew.-% eines Monomers mit Carboxyl- oder Hydroxylfunktion
d) 0 bis 20 Gew.-% eines weiteren Monomers, das von a), b) und c) verschieden ist
und die Klebemasse chemisch vernetzt ist.

Im Folgenden wird unter einer Haftklebemasse dabei eine viskoelastische Masse verstanden, die bei Raumtemperatur in trockenem Zustand permanent klebrig und klebfähig bleibt. Die Klebung erfolgt dabei durch leichten Anpressdruck sofort auf fast allen Substraten.

Das erfindungsgemäße Klebeband weist gemäß einer ersten vorteilhaften Ausführungsform die folgenden Eigenschaften auf, um beispielsweise in der Verwendung als Abdeckband in Lackierprozessen hervorragend geeignet zu sein:
- eine Klebkraft auf Stahl von mindestens 1,5 N/cm, vorzugsweise bis zu 2,5 N/cm
- einen Aufziehquotienten aus der Abzugskraft vom Haftgrund nach der Anwendung und der Klebkraft auf Stahl von kleiner 2 und
- einen Rolling Ball Tack von kleiner als 100 mm

Gemäß einer weiteren vorteilhaften Ausführungsform umfasst die Monomermischung der Acrylatmasse zusätzlich ein di- oder mehrfunktionelles Monomer e) zu 0 bis 5 Gew.-%.

Bevorzugt besteht das Basispolymer der Acrylatmasse aus
a) 80 bis 94,9 Gew.-%
b) 5 bis 17 Gew.-%
c) 0,1 bis 3 Gew.-%
d) 0 bis 10 Gew.-%
e) 0 bis 2 Gew.-%

Besonders bevorzugt besteht das Basispolymer der Acrylatmasse aus
a) 85 bis 94,9 Gew.-%
b) 5 bis 13 Gew.-%
c) 0,1 bis 2 Gew.-%
d) 0 bis 5 Gew.-%
e) 0 bis 1 Gew.-%

Gemäß bevorzugten Ausführungsformen besteht das Basispolymer der Acrylatmasse nur aus den Monomeren a) bis d) oder - in einer Variante - nur aus den Monomeren a) bis e). Eventuell in den Monomeren vorhandene Verunreinigungen (beispielsweise aus dem Herstellprozess) finden dann weiter vorzugsweise bei der Bestimmung der Zusammensetzung keine Berücksichtigung.

Als Monomere für c) kommen zum Beispiel Acrylsäure, Methacrylsäure, Itaconsäure, Maleinsäure, Fumarsäure oder Maleinsäureanhydrid ebenso C₁- bis C₁₀-Hydroxyalkyl(meth)acrylate wie insbesondere Hydroxyethyl- oder Hydroxypropyl(meth)acrylat in Betracht. Bevorzugt sind Acrylsäure oder Methacrylsäure.

Die Monomere d) sind ethylenisch ungesättigte Monomere, die nicht unter a) bis c) fallen und gewählt werden können aus der Gruppe der C₁- bis C₄₀-(Meth)acrylsäurealkylester wie zum Beispiel Methylacrylat, Ethyl(meth)acrylat, n-Butyl(meth)acrylat, t-Butyl(meth)acrylat, Cyclohexyl(meth)acrylat, n-Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethylmethylitaconat. Ebenfalls fallen vinylaromatische Monomere wie zum Beispiel Styrol, Vinyltoluol, Methylstyrol, n-Butylstyrol, Decylstyrol darunter. Von letzteren bevorzugt ist Styrol.
Weitere mögliche Monomere zur Erzielung der vorteilhaften Eigenschaften sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril, Säureamide wie Acrylamid oder Methacrylamid oder ungesättigte Kohlenwasserstoffe mit 2 bis 8 Kohlenstoffatomen wie Ethylen, Propen, Butadien, Isopren, 1-Hexen oder 1-Octen.

Als Vernetzermonomere e) zur Beeinflussung der physikalischen und optischen Eigenschaften der Haftklebemasse kommen mehrfunktionale ethylenisch ungesättigte Monomere in Frage. Beispiele hierzu sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe der mehrfunktionellen Monomere fallen auch UV-vernetzbare Monomere, wie zum Beispiel mit (Meth)acrylat funktionalisierte Derivate des Benzophenons oder des Benzoins.
Eine weitere Gruppe von Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder Aminen statt, besonders in Anwesenheit von Carboxylfunktionen.

Bevorzugt liegt das Basispolymer, das das Acrylatpolymer bildet, in Form einer wässrigen Dispersion vor.
Die Herstellung des Acrylatpolymers aus dem Basispolymer erfolgt dazu in einer bevorzugten Ausführungsform durch Emulsionspolymerisation, es handelt sich daher um ein Emulsionspolymerisat. Bei der Emulsionspolymerisation wird direkt eine wässrige Dispersion des Polymeren in situ hergestellt. Alternativ kann die Herstellung jedoch auch durch Lösungspolymerisation und anschließende Dispergierung in Wasser erfolgen.

Bei der Emulsionspolymerisation werden ionische und/oder nichtionische Emulgatoren und/oder Schutzkolloide beziehungsweise Stabilisatoren als grenzflächenaktive Verbindungen zunächst zur Stabilisierung der Monomertröpfchen, nach erfolgter Polymerisation zur Stabilisierung der Polymerdispersion verwendet.
Als Schutzkolloide kommen amphiphile Polymere wie Polyvinylalkohol, Polyvinylacetat, Polyvinylpyrrolidon, Zelluloseether wie Methylzellulose, Hydroxyethylzellulose, Hydroxypropylzellulose, aber auch natürliche Polymere wie Stärke, Proteine, Alginate, Pektine und Gelatine in Frage. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegt. Selbstverständlich müssen im Falle der Verwendung von Gemischen grenzflächenaktiver Substanzen die Einzelkomponenten miteinander verträglich sein, was im Zweifelsfall anhand weniger Vorversuche überprüft werden kann. Vorzugsweise werden anionische und nichtionische Emulgatoren als grenzflächenaktive Substanzen verwendet. Gebräuchliche begleitende Emulgatoren sind zum Beispiel ethoxylierte Fettalkohole (Ethoxylierungsgrad: 3 bis 50, Alkylrest: C₈ bis C₃₆), ethoxylierte Mono-, Di-und Trialkylphenole (Ethoxylierungsgrad: 3 bis 50, Alkylrest: C₄ bis C₉), Alkalimetallsalze von Dialkylestern der Sulfobernsteinsäure sowie Alkali- und Ammoniumsalze von Alkylsulfaten (Alkylrest: C₈ bis C₁₂), von ethoxylierten Alkanolen (Ethoxylierungsgrad: 4 bis 30, Alkylrest: C₁₂ bis C₁₈), von ethoxylierten Alkylphenolen (Ethoxylierungsgrad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Darüber hinaus sind noch Alkylbenzolsulfonate und Alkylarylpolyethersulfate zu nennen.
Die grenzflächenaktive Substanz wird üblicherweise in Mengen von 0,1 bis 10 Gewichtsteilen bezogen auf die zu polymerisierenden Monomeren verwendet.

Die Polymerisation wird durch radikalbildende Initiatoren gestartet. Wegen der unerwünschten inhibierenden Wirkung von Sauerstoff findet die Reaktion bevorzugt in inerter Atmosphäre, zumeist Stickstoff, statt. Initiatoren für die Emulsionspolymerisation sind üblicherweise wasserlöslich. Solche sind zum Beispiel Ammonium- und Alkalimetallsalze der Peroxidischwefelsäure wie Natriumperoxodisulfat, Wasserstoffperoxid oder organische Peroxide wie tert.-Butylhydroperoxid.
Geeignet sind auch so genannte Reduktions-Oxidations (RedOx)-Initiator-Systeme. Diese bestehen aus mindestens einem meist anorganischen Reduktionsmittel und einem anorganischen oder organischen Oxidationsmittel. Bei der Oxidationskomponente handelt es sich in der Regel um die bereits vorstehend genannten Initiatoren für die Emulsionspolymerisation. Bei der Reduktionskomponente handelt es sich zum Beispiel um Alkalimetallsalze der schwefligen Säure wie zum Beispiel Natriumsulfit oder Natriumhydrogensulfit, um Alkalisalze der dischwefligen Säure wie Natriumdisulfit, um Bisulfitadditionsverbindungen aliphatischer Aldehyde und Ketone wie Acetonbisulfit oder um Reduktionsmittel wie Hydroxymethansulfinsäure und deren Salze oder Ascorbinsäure. Die (RedOx)-Initiator-Systeme können unter Mitverwendung löslicher Metallverbindungen, deren metallische Komponente in mehreren Wertigkeitsstufen auftreten kann, verwendet werden.
Übliche Redox-Initiator-Systeme sind zum Beispiel Ascorbinsäure/Eisen(II)-sulfat/Natriumperoxodisulfat, tert.-Butylhydroperoxid/Natriumdisulfit, tert.-Butylhydroperoxid/Na-Hydroxymethansulfinsäure. Die einzelnen Komponenten, zum Beispiel die Reduktionskomponente, können auch Mischungen sein, etwa eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-% bezogen auf die Lösung. Die Menge der Initiatoren beträgt im Allgemeinen 0,1 bis 10 Gew.-%, bevorzugt 0,5 bis 5 Gew.-% bezogen auf die zu polymerisierenden Monomeren. Es können auch mehrere verschiedene Initiatoren bei der Emulsionspolymerisation Verwendung finden.

Bei der Polymerisation können Regler eingesetzt werden, zum Beispiel in Mengen von 0 bis 0,8 Gewichtsteilen bezogen auf 100 Gewichtsteile der zu polymerisierenden Monomeren, durch die die Molmasse verringert wird. Geeignet sind zum Beispiel Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Alternativ zur klassischen freien radikalischen Polymerisation kann das Polymer auch kontrolliert radikalisch polymerisiert werden unter Verwendung von RAFT (reversible addition-fragmentation chain transfer agent)-Reglern. Das Verfahren und mögliche RAFT-Reagenzien sind zum Beispiel beschrieben in US 7,179,872 B2. Dabei wird eine engere Molekulargewichtsverteilung erreicht als bei der klassischen radikalischen Polymerisation.

Die Emulsionspolymerisation erfolgt in der Regel bei 30 bis 130 °C, vorzugsweise bei 50 bis 90 °C. Das Polymerisationsmedium kann sowohl nur aus Wasser als auch aus Mischungen aus Wasser und damit mischbaren Flüssigkeiten wie Methanol bestehen. Vorzugsweise wird reines, deionisiertes Wasser verwendet. Die Emulsionspolymerisation kann sowohl als Batchprozess als auch in Form eines Zulaufverfahrens, einschließlich Stufen- oder Gradientenfahrweise, durchgeführt werden. Dominierend ist das Zulaufverfahren (semikontinuierliche Fahrweise), bei dem man einen Teil der Monomere vorlegt, auf die Polymerisationstemperatur erhitzt, anpolymerisiert und anschließend den Rest der Monomere in den Reaktor dosiert. Üblicherweise geschieht die Dosierung über mehrere räumlich getrennte Zuläufe, von denen einer oder mehrere die Monomeren in reiner oder in emulgierter Form enthalten. Die Zufuhr der Monomere geschieht kontinuierlich, stufenweise oder unter Überlagerung eines Konzentrationsgefälles unter Aufrechterhaltung der Polymerisation. In den Reaktor kann zur besseren Einstellung der Teilchengröße eine Polymersaat vorgelegt werden.
Der Initiator wird üblicherweise parallel zum Monomerzulauf separat in den Reaktor dosiert. Er kann sowohl vollständig in das Polymerisationsgefäß vorgelegt als auch nach Maßgabe seines Verbrauchs im Verlauf der Emulsionspolymerisation kontinuierlich oder stufenweise eingesetzt werden. Der Zugabemodus hängt von der chemischen Natur des Initiatorsystems als auch von der Polymerisationstemperatur ab. Vorzugsweise wird ein Teil vorgelegt, und der Rest nach Maßgabe des Verbrauchs der Polymerisationszone zugeführt. Zur Entfernung der Restmonomeren wird in der Regel nach dem Ende der eigentlichen Emulsionspolymerisation, also nach einem Umsatz der Monomeren von mindestens 95 %, erneut Initiator zugesetzt. Nach erfolgter Nachinitiierung wird der Ansatz noch eine Weile bei Polymerisationstemperatur gerührt, um die Reaktion weitgehend quantitativ erfolgen zu lassen.
Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 70 Gew.-% erhalten. Für eine hohe Raum/Zeitausbeute des Reaktors werden Dispersionen mit einem möglichst hohen Feststoffgehalt angestrebt. Um Feststoffgehalte > 60 Gew.-% erreichen zu können, ist eine polymodale Teilchengröße zweckmäßig, da sonst die Viskosität zu hoch wird und die Dispersion nicht mehr handhabbar ist. Die Erzeugung einer neuen Teilchengeneration kann beispielsweise durch Zusatz von Saatpolymer, durch Zugabe zusätzlicher Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung. Das so hergestellte Polymer wird vorzugsweise in Form seiner wässrigen Dispersion verwendet.

Die Glasübergangstemperatur des Polymeren beziehungsweise des Emulsionspolymerisats beträgt vorzugsweise -60 bis 0 °C, besonders bevorzugt -60 bis -10 °C und ganz besonders bevorzugt -40 bis -12 °C.
Die Angaben zur Glasübergangstemperatur für nicht anorganische und nicht überwiegend anorganische Materialien, insbesondere für organische und polymere Materialien, beziehen sich auf den Glasübergangstemperatur-Wert T_{g} nach DIN 53765:1994-03 (vgl. Abschnitt 2.2.1), sofern im Einzelfall nichts anderes angegeben ist.

Der pH-Wert der Polymerdispersion ist typischerweise zwischen 2 und 6, kann aber mit Basen wie Ammoniak oder Natriumhydroxid sowie Puffern neutral oder alkalisch eingestellt werden.

Das Polymer beziehungsweise die Dispersion des Polymeren eignet sich als Klebstoff, insbesondere als Haftklebstoff. Es kann in reiner Form eingesetzt werden oder zur Einstellung von optischen und klebtechnischen Eigenschaften Farbstoffe, Lichtschutzmittel, Antioxidantien (primäre und sekundäre), Füllstoffe, oder Tackifier (klebrigmachende Harze) enthalten. Zur Verbesserung der Verarbeitungseigenschaften können nach Bedarf Rheologieadditive (Verdicker), Entschäumer, Entlüfter, Netzmittel oder Verlaufsmittel nützlich sein.
Füllstoffe können verstärkend oder nicht verstärkend sein. Vor allem zu nennen sind hier Siliziumdioxide (sphärisch, nadelförmig oder unregelmäßig wie die pyrogenen Silicas), Glas als Voll- oder Hohlkugeln, Kalziumcarbonate, Zinkoxide, Titandioxide, Aluminiumoxide oder Aluminiumoxidhydroxide. Vorteilhaft werden die Füllstoffe in Wasser vordispergiert oder als kolloidale Lösung mit dem Basispolymer gemischt. Die Partikelgröße kann zwischen 1 Nanometer und 100 Mikrometer, bevorzugt zwischen 5 Nanometer und 20 Mikrometer, besonders bevorzugt zwischen 5 Nanometer und 10 Mikrometer liegen.
Im Prinzip geeignet sind auch expandierbare Kugeln (so genannte Mikroballons) als Füllstoff geeignet. Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.
Durch ein Einwirken auf die Mikroballons, insbesondere durch eine Wärmeeinwirkung erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt sind, können Massecompoundierung und Schäumung auch gleichzeitig in einem Schritt erfolgen.
Weiterhin sind unexpandierte Mikroballontypen auch als wässrige Dispersion mit einem Feststoff- beziehungsweise Mikroballonanteil von 40 bis 45 Gew.-% erhältlich und sind zur Schäumung von erfindungsgemäßen Klebemassen geeignet.

Im weiteren Sinn können auch Blends mit anderen, thermodynamisch nicht mischbaren Dispersionen oder Latices wie zum Beispiel aus Polyurethan, Styrol-Butadien Copolymer, Polyolefinen, Vinylacetat-Ethylen Copolymer oder Naturkautschuk als (viskoelastischer) Füllstoff aufgefasst werden und sind daher vom Erfindungsgedanken umfasst.
Die Konzentration der die optischen und klebtechnischen Eigenschaften beeinflussenden Additive liegt bevorzugt zwischen 0,1 und 30 Gew.-Teilen, besonders bevorzugt 0,5 bis 20 Gew.-Teilen, ganz besonders bevorzugt 1 bis 10 Gew.-Teilen, jeweils bezogen auf das Acrylatpolymer. Die Konzentration der die Verarbeitbarkeit modifizierenden Additive liegt bevorzugt zwischen 0,01 und 10 Gew.-Teilen, besonders bevorzugt 0,01 bis 5 Gew.-Teilen, ganz besonders bevorzugt 0,01 bis 3 Gew.-Teilen, jeweils bezogen auf das Acrylatpolymer.

Tackifier sind zum Beispiel Naturharze wie Kolophoniumharze (chemische Basis Abietinsäure) und deren durch Disproportionierung oder Isomerisierung, Polymerisation, Dimerisation oder Hydrierung entstehenden Derivate. Diese können in ihrer Salzform (mit zum Beispiel ein- oder mehrwertigen Gegenionen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, Glycerin oder Pentaerythritol. Des Weiteren finden auch Kohlenwasserstoffharze, zum Beispiel Cumaron-, Inden-, Polyterpen- und Kohlenwasserstoffharze auf Basis ungesättigter Kohlenwasserstoffverbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Für Polyacrylate besonders geeignet sind auch Terpenphenolharze. Unter anderem werden auch Polyacrylate, welche ein geringes Molekulargewicht aufweisen, verwendet, um die Klebrigkeit und den Tack zu erhöhen. Vorzugsweise haben diese Polyacrylate ein gewichtsmittleres Molekulargewicht M_{w} unter 30 000 g/mol. Die Polyacrylate bestehen bevorzugt zu mindestens 60 Gew.-%, insbesondere mindestens 80 Gew.-% aus C₁- bis C₈-Alkyl(meth)acrylaten.
Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁵ und 10⁶ mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Å = 10⁻¹⁰ m).

Bevorzugte Tackifier sind Kolophonium- und Terpenphenolharze.
Die Gewichtsmenge der Tackifier beträgt vorzugsweise 5 bis 50 Gewichtsteile, besonders bevorzugt 5 bis 30 Gewichtsteile bezogen auf 100 Gewichtsteile Polymer (fest/fest). In der Regel werden die Additive, so auch die Tackifier, in Form von Dispersionen zur Polymerdispersion zugemischt.

Zur Erzielung der erfindungsgemäßen Eigenschaften der Haftklebemasse muss diese mit Vernetzern chemisch vernetzt werden. Die Vernetzer werden der Haftklebemasse in Dispersionsform oder wässriger Lösung vor dem Aufbringen auf den Träger zugegeben.

Als chemische Vernetzer werden di- oder mehrfunktionelle aliphatische oder aromatische Isocyanate, Epoxide, Carbodiimide, Oxazoline, zyklische Harnstoffe, Carbonsäurehydrazide, Hydrazine und/oder Aziridine verwendet.

Als aliphatische Isocyanate sind zu erwähnen Hexamethylendiisocyanat (HDI), Isophorondiisocyanat (IPDI), Dicyclohexylmethan-4,4'-diisocyanat, als aromatische Toluol-2,4-diisocyanat (TDI), Diphenylmethandiisocyanat (MDI). Es können auch Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten, verwendet werden. Bevorzugt wird Diphenylmethan-bis-4,4'-ethylenharnstoff.
Geeignete Epoxidvernetzer sind beispielsweise Glycidylether von mehrwertigen Alkoholen, Phenolen wie Bisphenol A oder dessen hydrierte Variante, Ethylenglykol, dessen Oligo- oder Polymere, Propylenglycol, Glycerin, Pentaerythritol, Trimethylolpropan, Sorbitol. Auch Glycidylester von zum Beispiel Phthalsäure oder Terephthalsäure sind zu nennen. Solche Vernetzer werden zum Beispiel vertrieben unter der Bezeichnung Denacol von der Firma Nagase. Dazu gehört auch die oben beschriebene Variante mit polymergebundenen Epoxiden wie Glycidylmethacrylat als funktionelles Monomer.
Carbodiimide sind kommerziell erhältlich zum Beispiel unter dem Namen XL-702 von Picassian Polymers oder Carbodilite von Nisshinbo.

Oxazolinvernetzer sind beispielsweise als wasserlösliche oder emulgierbare Typen unter dem Handelsnamen Epocros von Nippon Shokubai erhältlich.
Ein zyklischer Harnstoff des Typs Diphenylmethan-bis-4,4'-ethylenharnstoff wird zum Beispiel von der Firma Icap Sira unter dem Namen Icaplink X5 angeboten. Dieser Vernetzer ist besonders bevorzugt geeignet.
Geeignete Hydrazide sind vor allem Dicarbonsäuredihydrazide aus Dicarbonsäuren mit vor allem 2 bis 10 Kohlenstoffatomen, etwa Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid oder Isophthalsäuredihydrazid.
Als Hydrazine kommen zum Beispiel Alkylenbishydrazine wie N,N'-Diaminopiperazin oder Arylenbishydrazine wie Phenylenbishydrazin in Frage.
Als sehr wirksame Aziridinvernetzer stehen polyfunktionelle Aziridine kommerziell zur Verfügung, zum Beispiel Crosslinker CX-100 von DSM Neoresins (Trimethylolpropan-tris-(N-methylaziridinyl)propionat). Dieser Vernetzer ist besonders bevorzugt geeignet.

Geeignete Einsatzmengen der chemischen Vernetzer liegen zwischen 0,1 und 10 Gewichtsteilen bezogen auf das Polymer, bevorzugt 0,1 bis 5 Gewichtsteile.

Das erfindungsgemäße Klebeband kann mit einem Liner abgedeckt sein. Der Liner für das Produkt oder der Prozessliner ist zum Beispiel ein Trennpapier oder eine Trennfolie, vorzugsweise mit Silikonbeschichtung. Als Träger kommen zum Beispiel Folien aus Polyester oder Polypropylen oder kalandrierte Papiere mit oder ohne Dispersions- oder Polyolefinbeschichtung in Frage.

Der Masseauftrag (Beschichtungsstärke) der Acrylatmasse liegt vorzugsweise zwischen 20 und 200 g/m², weiter vorzugsweise zwischen 25 und 75 g/m², ganz besonders vorzugsweise zwischen 30 und 50 g/m².

Das erfindungsgemäße Klebeband wird dadurch gebildet, dass auf den Träger partiell oder vollflächig einseitig die Acrylatklebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin können die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Die Träger können vor dem Zusammenbringen mit der Klebemasse (auf der Streich-, auch Beschichtungsseite genannt) chemisch wie durch Primerung oder durch eine physikalische Vorbehandlung wie Corona vorbereitet werden. Die Rückseite derselben kann einer antiadhäsiven physikalischen Behandlung oder Beschichtung unterzogen sein.

Weiter können diese Materialien vor- beziehungsweise nachbehandelt werden. Gängige Vorbehandlungen sind Corona und Hydrophobieren, geläufige Nachbehandlungen sind Kalandern, Tempern, Kaschieren, Stanzen und Eindecken.

Als Trägermaterial wird erfindungsgemäß Papier eingesetzt, insbesondere solches, wie es oben beschrieben ist.
Als Papierträger für das Klebeband können alle nach den oben beschriebenen Verfahren gewonnenen, unbehandelten Papiere eingesetzt werden.

Vorteilhaft besitzen die Papiere eine Reißdehnung zwischen 3 % und 60 %.

Zur Erhöhung der Festigkeit, speziell unter feuchten Bedingungen, werden die Papiere vor der weiteren Verarbeitung zum Klebeband mit einer Imprägnierung ausgerüstet. Dafür können handelsübliche Imprägniermittel eingesetzt werden wie zum Beispiel wässrige Dispersionen eines carboxylgruppenhaltigen Acrylsäureestercopolymerisats oder eines carboxylgruppenhaltigen Styrol-Butadien- Copolymerisates. Das Flächengewicht des Imprägniermitteleintrags (trocken) kann zwischen 6 g/m² und 40 g/m² betragen, vorteilhaft aber zwischen 10 g/m² und 30 g/m².

Besonders bevorzugt wird ein dünnes anschmiegsames Papier, das washi-artig sein kann. Japanpapier (auch Washi oder Wagami) ist ein traditionell handgeschöpftes, durchscheinendes Papier aus Japan. Heute wird dieses Papier industriell gefertigt. Japanpapier wird überwiegend aus Fasern von Pflanzen gewonnen. Die bekanntesten darunter sind Gampi, Kouzo und Mitsumata. Diese ergeben ein sehr zähes, widerstandsfähiges Papier aufgrund der langen Fasern. Dies ist auch auf die Herstellungsprozedur zurückzuführen, da die Rinde der Pflanzen nicht zerschnitten, sondern durch Schlagen und Klopfen zerkleinert wird.
Die Technik, aus beliebigen Pflanzenfasern Papier zu erzeugen, gibt es seit mehr als 1300 Jahren. Mit dem Aufkommen von Papier aus Holzschliff in Japan mit der Meiji-Restauration (ab 1868) verlor das traditionell erzeugte Japanpapier seine Rolle als Massengut, und so wird es heute dem Kunsthandwerk zugeordnet.

In einer vorteilhaften Ausgestaltung der Erfindung liegt das Flächengewicht des Papiers (unter Berücksichtigung einer eventuellen Imprägnierung oder Lackierung mit einem Release) bei 25 bis 250 g/m², bevorzugt bei 40 bis 200 g/m², ganz bevorzugt bei 50 bis 90 g/m² liegt. Die Dicke liegt vorzugsweise zwischen 50 und 200 µm, besonders bevorzugt zwischen 50 und 90 µm.

Die Reißdehnung des Papiers liegt gemäß einer besonders bevorzugten Ausführungsform der Erfindung zwischen 3 und 8 %, besonders bevorzugt bei 5 bis 7 %.

Gemäß einer weiteren vorteilhaften Ausführungsform der Erfindung wird ein Trennmittel direkt auf der Rückseite des Klebebandträgers aufgebracht, um somit antiadhäsive Eigenschaften hervorzurufen. Das Abrollen des üblicherweise zu einer archimedischen Spirale aufgewickelten Klebebands wird erleichtert, und es verbleibt die Klebemasse auf der Unterseite des Klebebands, also auf der Seite, auf der die Klebemasse ursprünglich verankert war. Ein unerwünschter Übergang der Klebemasse auf die Rückseite beim Abrollen - dem Fachmann als Umspulen der Klebemasse bekannt - unterbleibt.

Man unterscheidet drei Haupttypen von Trennmitteln, auch Releasebeschichtungen genannt:
Zunächst gibt es Trennmittel auf Basis langkettiger Alkylgruppen. Beispiele sind Polyvinylstearylcarbamte, Polyethyleniminstearylcarbamide, Chrom-Komplexe von C₁₄-bis C₂₈-Fettsäuren and Stearyl-Copolymere (beispielsweise beschrieben in der DE 28 45 541 A).
Daneben existieren Acrylpolymere mit perfluorierten Alkylgruppen (US 3,318,852 A), die als Latex oder aus Lösungsmittel aufgebracht werden.
Die am weitesten verbreiteten Trennmittel sind Silikone oder Fluorsilikonverbindungen, die auf Poly(dimethyl-Siloxan) basieren. Diese werden bevorzugt eingesetzt, um die oben beschriebenen Trennpapiere herzustellen, indem Silikon auf den Träger des Trennpapiers aufgebracht wird.
Je nach Anwendungsfall kommen diese zum Einsatz.

Bevorzugt wird das mit einem Papierträger ausgerüstete Klebeband als Abdeckband, beispielsweise in Lackierprozessen eingesetzt. Besonders vorteilhaft kann das erfindungsgemäße Band von Profi- oder Hobbymalern im Außenbereich eingesetzt werden, zum Beispiel beim Fassadenanstrich, bei Tür- oder Fensterarbeiten sowie anderen hochwertigen Malerarbeiten.
Diese Lackierprozesse können dabei hochprofessionell in der Automobilindustrie stattfinden.

Das erfindungsgemäße Klebeband mit Papierträger ist für einen Zeitraum von etlichen Wochen UV-Licht stabil und witterungsstabil, es lässt sich auch nach längerer Verweilzeit von mikroskopisch rauen Untergründen vollständig reversibel entfernen.
Daher kann es auch im Außenbereich eingesetzt werden. Im Vergleich zu herkömmlichen Acrylatklebemassen, die ebenfalls gegen UV-Licht stabil und witterungsbeständig sind, verhält sich die erfindungsgemäße Acrylatdispersion in ihrer Reversibilität deutlich vorteilhafter. Die Reversibilität wird durch Vernetzung erreicht, ohne den Tack und die Klebkraft der unvernetzten Klebmasse im dem dem Fachmann bekannten Ausmaß zu senken.

Der allgemeine Ausdruck "Klebeband" umfasst im Sinne dieser Erfindung alle flächigen Gebilde wie in zwei Dimensionen ausgedehnte Stücke des Bandes, Bänder mit ausgedehnter Länge und begrenzter Breite, abgelängte Bandabschnitte, Stanzlinge und dergleichen.

Bevor die Erfindung mittels Beispielen plastisch dargestellt wird, werden die verwendeten Meßmethoden beschrieben.

### Prüfmethoden

### Reißdehnung

Die Reißdehnung wird nach der Prüfmethode AFERA 5004 bestimmt.

### Klebkraft

Die Bestimmung der Klebkraft (gemäß AFERA 5001) wurde wie folgt durchgeführt. Als definierter Haftgrund wurden eine Stahlfläche und Untergründe mit mikroskopisch rauer Oberfläche (wie unten beschrieben ,Herstellung mikroskopisch rauer Oberflächen und Abzugskraft') eingesetzt. Für die Ermittlung der Klebkraft auf Stahl wurde das zu untersuchende verklebbare Flächenelement auf eine Breite von 20 mm und eine Länge von 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180 ° vom Haftgrund mit einem Zugprüfungsgerät (Firma Zwick) bei einer Abzugsgeschwindigkeit von v=300mm/min abgezogen, und die hierfür bei Normalklima (23 ± 1 °C, 50 ± 5 % rel. Feuchte) benötigte Kraft gemessen. Der Messwert (in N/cm) ergab sich als Mittelwert aus drei Einzelmessungen.
Die Messung der Abzugskraft nach Anwendung wird weiter unten im Abschnitt ,Herstellung mikroskopisch rauer Oberflächen und Abzugskraft' beschrieben.

### Prüfung der Reißer durch beschleunigtes Abziehen

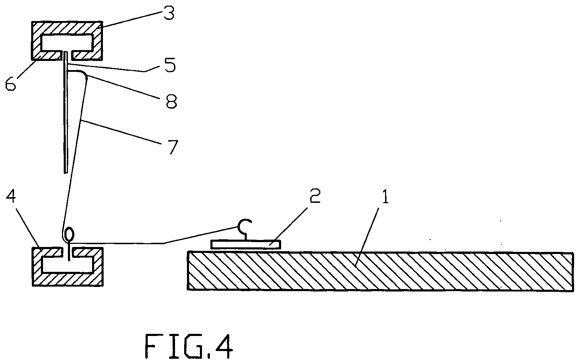

Zur Messung der Kraft, bei der die Papierklebebänder unter beschleunigtem Abziehen reißen, wurden die Streifen wie für eine Klebkraftmessung (gemäß AFERA 5001) auf den ausgewählten Untergründen aufgeklebt und anschließend für 1 Stunde bei 60 °C getempert. Die Streifen wurden jeweils nach 10, 20 und 30 min nach der Entnahme aus dem Ofen klimatisiert (Normalklima 23 ± 1 °C, 50 ± 5% rel. Feuchte) und beschleunigt abgezogen. Dafür wurde der Prüfuntergrund in die obere Klemmbacke eines Zugprüfungsgerätes (Firma Zwick) eingespannt. Der Handhabungsabschnitt des Klebbandstreifens wurde mit einem Nylonband versehen, das am anderen Ende über eine Umlenkrolle an eine Kraft-Zug-Maschine angehängt ist. Für das beschleunigte Abziehen wird das Nylonband an einem beweglichen Schlitten befestigt und der Schlitten über einen Linear-Motor entgegen der Abzugsrichtung mit 0,5 m/s² beschleunigt (schematischer Aufbau siehe Figur 4). Während des Beschleunigungsvorgangs wird die Kraft mit einem Zugprüfungsgerät (Firma Zwick) gemessen. Die maximale Kraft, bei der der Papierträger reißt, ist die gesuchte Messgröße. Von den generierten Messwerten wird das arithmetische Mittel (in N/cm) angegeben.

### Bewitterungstest

Als Schnelltest anstelle der langwierigen Freibewitterung wurde der so genannte "Suntest" in Anlehnung an die ISO 4892-2 (2006) durchgeführt. Dazu wurden Muster auf Hart-PVC, Glas und eloxierten Aluminium-Platten verklebt und mit einem Kunststoffrakel in Längsrichtung zweimal fest angerakelt. Danach wurden die Muster einer Kombination von UV-Bestrahlung mittels einer 765 Watt Xenonlampe und temporärer Bewässerung unterworfen. In den zweistündigen Zyklen folgten nach 18 min Kombination Bewässerung und Bestrahlung 102 min Bestrahlung ohne Bewässerung.
Nach der Bewitterungszeit wurden die Streifen nach Rekonditionierung auf Raumtemperatur visuell beurteilt, anschließend unter 90 ° und 180 ° mit einer Geschwindigkeit von 1 cm/s per Hand mindestens 2 cm pro Abzugswinkel abgezogen und hinsichtlich Reißern und Rückständen beurteilt. Nach Herstellerangaben (zum Beispiel Firma Atlas) entspricht eine Woche Suntester ca. 3 Monaten Freibewitterung in Mitteleuropa.
Sporadisch durchgeführte Dauerteste unter realen Außenbedingungen (Freibewitterung) erfolgten in Hamburg auf denselben Haftgründen auf einem Gebäudedach mit Südausrichtung unter einem Neigungswinkel von 45 °. Die Ergebnisse waren vergleichbar zu den oben genannten Schnelltesten.

### Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1°C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21°) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

### Herstellung mikroskopisch rauer Oberflächen und Abzugskraft nach Anwendung

Zur Herstellung mikroskopisch rauer Untergründe wurde die Oberfläche mit Schleifpapier der Körnung 600 aufgeraut. Dafür wurde das Schleifpapier jeweils circa 15-mal - doch mindestens so oft, bis die vorher glänzende Oberfläche matt ist - auf der Oberfläche in x und y Richtung geführt, so dass die Schleifspuren senkrecht zu einander stehen. Die Reinigung der Oberfläche erfolgte mit einem mit Ethanol getränkten Tuch.

Mit dieser Methode lassen sich mikroskopisch raue Untergründe von Aluminiumblechen (zum Beispiel: Aluminiumplatten 1 mm, CLA011298, Firma Classen GmbH, D-25462 Rellingen), lackierten Aluminiumblechen (Lack: Glasurit 1K-Decklack ALD63004112, ebenholz schwarz) und Hart PVC Platten (zum Beispiel: PVC-U Platten extrudiert, Firma ThyssenKrupp Schulte, D-40235 Düsseldorf) herstellen.

Damit die Klebemasse schnell und gut auf den mikroskopisch rauen Untergründen aufziehen kann, wurden die Platten mit dem Papierklebeband beklebt, und dieses mit einem Kunststoffrakel in Längsrichtung zweimal fest angerakelt, danach die Platten vier Tage lang bei 60 °C und einer relativen Luftfeuchte von 90 % im Klimaschrank gelagert. Nach der Klimalagerung wurden die Platten mindestens 8 Stunden im Normalklima (23 ± 1 °C, 50 ± 5 % rel. Feuchte) konditioniert und dann wurde analog zu oben beschriebener Klebkraftprüfung die Abzugskraft nach Anwendung mittels Zugprüfmaschine bestimmt und das arithmetische Mittel (in N/cm) aus drei Einzelmessungen ermittelt.

### Dynamische Viskositätsmessung

Die Viskositätsmessung wird mit einem Rheometer des Typs ARES (Rheometric Scientific) bei Raumtemperatur und bei einer Schergeschwindigkeit von 100 s⁻¹ mit einem Kegel-Platte-System mit einem Durchmesser von 50 mm durchgeführt.

Im Folgenden wird das erfindungsgemäße Klebeband durch die Angabe verschiedener Zusammensetzungen der Klebemasse näher erläutert, ohne die Erfindung damit in irgendeiner Art und Weise einschränken zu wollen.

### Beispiele

Zur Verdeutlichung des Erfindungsgedankens wurden Polymerdispersionen mit folgender Comonomerzusammensetzung erprobt:

| Monomer | Polymer 1 | Polymer 2 | Polymer 3 | Polymer 4 | Polymer 5 | Polymer 6 |
|---|---|---|---|---|---|---|
| 2-Ethylhexylacrylat | 90 | 90 | - | 98 | 84 | 74 |
| Methylmethacrylat | 9 | 6 | - | - | - | - |
| n-Butylacrylat | - | - | 96 | - | 8 | 25 |
| Vinylacetat | - | 3 | - | - | - | - |
| Acrylnitril | - | - | 3 | 1 | 6 | - |
| Acrylsäure | 0,5 | 0,5 | 0,5 | 0,5 | 2 | 0,5 |
| 2-Hydroxyethylmethacrylat | 0,5 | 0,5 | 0,5 | 0,5 | - | 0,5 |

Die Polymerdispersionen wurden durch Verdünnen auf eine Viskosität von ca. 1500 mPa*s eingestellt, je nach Beispiel vor dem Beschichten mit einem Vernetzer abgemischt oder wie bei Beispiel 3 ohne weiteren Zusatz mit einem Drahtrakel so auf einen Papierträger aufgebracht, dass nach der Trocknung über 10 min und 105 °C ein Beschichtungsflächengewicht von ca. 40 g/m² resultierte.
Im Fall der Elektronenstrahlvernetzung (ESH) wurde das getrocknete Muster durch eine ESH-Bestrahlanlage gefahren.

### Folgende Beispielklebebänder wurden präpariert:

| | Polymer | Vernetzung (Angabe bezieht sich fest auf fest) |
|---|---|---|
| Beispiel 1 | 1 | 1 % Diphenylmethan-bis-4,4'-ethylenharnstoff |
| Beispiel 2 | 1 | 0,1 % Zinkoxid (Zinplex 15, Münzing Chemie) |
| Beispiel 3 | 1 | ESH (20 kGy, 85 kV) |
| Beispiel 4 | 1 | 1 % Hexamethylendiisocyanat |
| Beispiel 5 | 2 | 1 % Diphenylmethan-bis-4,4'-ethylenharnstoff |
| Gegenbeispiel 6 | 1 | Ohne Vernetzung |
| Gegenbeispiel 7 | 3 | 1 % Diphenylmethan-bis-4,4'-ethylenharnstoff |
| Gegenbeispiel 8 | 4 | 1 % Diphenylmethan-bis-4,4'-ethylenharnstoff |
| Gegenbeispiel 9 | 5 | 1 % Diphenylmethan-bis-4,4'-ethylenharnstoff |
| Gegenbeispiel 10 | 6 | 1 % Diphenylmethan-bis-4,4'-ethylenharnstoff |

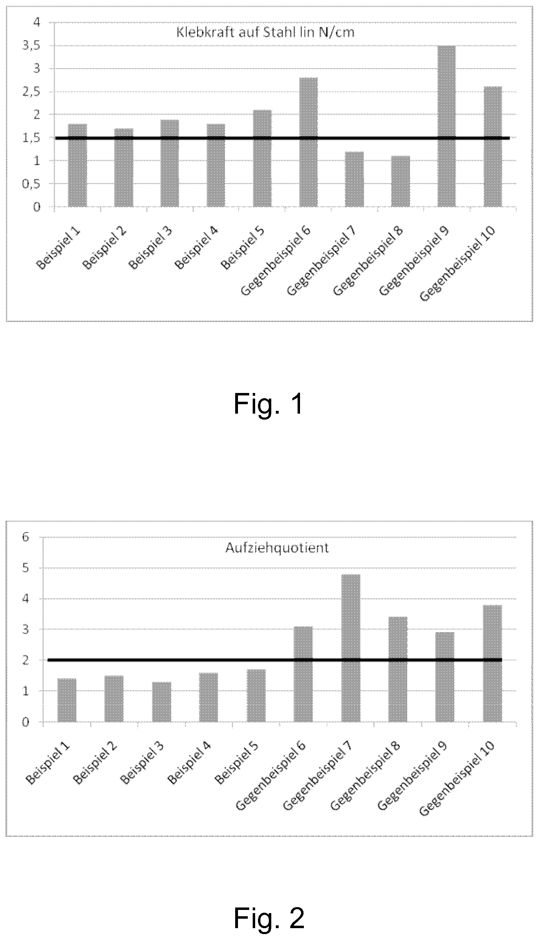

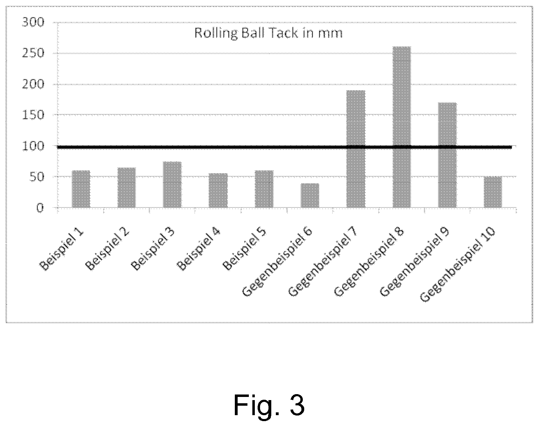

Das Beispiel 2, bei dem Zinkoxid als Vernetzer eingesetzt wird, sowie das Beispiel 3, bei dem eine Elektronenstrahlvernetzung stattfindet, sind nicht erfindungsgemäß.
Im Folgenden werden die Werte von Klebkraft auf Stahl (Figur 1), der Aufziehquotient (Quotient aus der Abzugskraft von mikrorauem Lack nach Bewitterung und der Klebkraft auf Stahl, Figur 2) sowie der Rolling Ball Tack (Figur 3) für die Beispiele dargestellt.

Alle Beispiele erfüllen die anwendungstechnischen Kriterien von ausreichender Klebkraft auf Stahl und einem Aufziehquotienten von kleiner 2 und einem Rolling Ball Tack unter 100 mm und entsprechen damit den Anforderungen an ein Papierklebeband insbesondere für Maler- und Lackierarbeiten.
Die erfindungsgemäßen Klebebänder weisen somit eine sichere Anfangshaftung auf, haften auch beim provisorischen Positionieren sicher, ohne selbsttätig abzufallen und lassen sich nach der Anwendung, die auch eine mehrwöchige UV- und/oder Feuchtbewitterung umfassen kann, rückstandsfrei und ohne Reißen des Papierträgers wieder vom Haftgrund entfernen, auch wenn dieser durch Alterung eine mikroraue Oberflächenstruktur angenommen hat.

### Bezugszeichenliste

- 1: Linearmotor
- 2: fahrbarer Schlitten
- 3: obere Klemme Zugprüfmaschine
- 4: untere Klemme Zugprüfmaschine
- 5: Aluminiumblech
- 6: Klebkraftschiene
- 7: Nylonband
- 8: Klebeband

## Patentansprüche

1. Klebeband mit einem Papierträger, auf dem einseitig eine Acrylatklebemasse in Form einer getrockneten Polymerdispersion aufgebracht ist, wobei das Acrylatpolymer aus folgenden Monomeren aufgebaut ist:
a) 70 Gew.-% bis 94,9 Gew.-% 2-Ethylhexylacrylat
b) 5 Gew.-% bis 25 Gew.-% Methylmethacrylat
c) 0,1 Gew.-% bis 5 Gew.-% eines Monomers mit Carboxyl- oder Hydroxylfunktion
d) 0 bis 20 Gew.-% eines weiteren Monomers, das von a), b) und c) verschieden ist und die Klebemasse chemisch vernetzt ist,
wobei als chemische Vernetzer di- oder mehrfunktionelle aliphatische oder aromatische Isocyanate, Epoxide, Carbodiimide, Oxazoline, zyklische Harnstoffe, Carbonsäurehydrazide, Hydrazine und/oder Aziridine verwendet werden.

2. Klebeband nach Anspruch 1,
**dadurch gekennzeichnet, dass**
dem Acrylatpolymer der Acrylatklebemasse als Bestandteil e) 0 bis 5 Gew.-% eines di-oder mehrfunktionellen Monomers zugesetzt sind.

3. Klebeband nach Anspruch 1 oder 2,
**dadurch gekennzeichnet, dass**
das Acrylatpolymer der Acrylatklebemasse besteht aus:
a) 80 bis 94,9 Gew.-%
b) 5 bis 17 Gew.-%
c) 0,1 bis 3 Gew.-%
d) 0 bis 10 Gew.-%
e) 0 bis 2 Gew.-%

4. Klebeband nach Anspruch 3,
**dadurch gekennzeichnet, dass**
das Acrylatpolymer der Acrylatklebemasse besteht aus:
a) 85 bis 94,9 Gew.-%
b) 5 bis 13 Gew.-%
c) 0,1 bis 2 Gew.-%
d) 0 bis 5 Gew.-%
e) 0 bis 1 Gew.-%

5. Klebeband nach zumindest einem der vorherigen Ansprüche,
**dadurch gekennzeichnet, dass**
als Monomer c) Acrylsäure, Methacrylsäure, Itaconsäure, Maleinsäure, Fumarsäure oder Maleinsäureanhydrid ebenso C₁- bis C₁₀-Hydroxyalkyl(meth)acrylate wie insbesondere Hydroxyethyl- oder Hydroxypropyl(meth)acrylat eingesetzt werden, bevorzugt Acrylsäure oder Methacrylsäure.

6. Klebeband nach zumindest einem der vorherigen Ansprüche,
**dadurch gekennzeichnet, dass**
das Monomer d) gewählt wird aus der Gruppe der C₁- bis C₄₀-(Meth)acrylsäurealkylester, das Monomer d) ein Ester von ethylenisch ungesättigten Di- und Tricarbonsäuren und Anhydriden wie Ethylmaleat, Dimethylfumarat und Ethylmethylitaconat ist, das Monomer d) eine vinylaromatisches Monomer, vorzugsweise Styrol, ist, das Monomer d) ein Vinylester aus bis zu 20 Kohlenstoffatomen enthaltenden Carbonsäuren, ein Vinylether aus bis zu 10 Kohlenstoffatomen enthaltenden Alkoholen, ein Vinylhalogenid, ein Nitril, ein Säureamid oder ein ungesättigter Kohlenwasserstoff mit 2 bis 8 Kohlenstoffatomen ist.

7. Klebeband nach zumindest einem der vorherigen Ansprüche,
**dadurch gekennzeichnet, dass**
das Basispolymer, das das Acrylatpolymer bildet, in Form einer wässrigen Dispersion vorliegt.

8. Klebeband nach zumindest einem der vorherigen Ansprüche,
**dadurch gekennzeichnet, dass**
das Acrylatpolymer aus dem Basispolymer durch Emulsionspolymerisation hergestellt wird.

9. Klebeband nach Anspruch 1,
**dadurch gekennzeichnet, dass**
als Vernetzer Diphenylmethan-bis-4,4'-ethylenharnstoff oder Trimethylolpropan-tris-(N-methylaziridinyl)propionat verwendet werden.

10. Klebeband nach zumindest einem der vorherigen Ansprüche,
**dadurch gekennzeichnet, dass**
das Acrylatpolymer Zusatzstoffe wie Farbstoffe, Lichtschutzmittel, Antioxidantien (primäre und sekundäre), Füllstoffe oder Tackifier (klebrigmachende Harze), vorzugsweise in einer Konzentration zwischen 0,1 und 30 Gew.-Teilen, bevorzugt 0,5 bis 20 Gew.-Teilen, besonders bevorzugt 1 bis 10 Gew.-Teilen, jeweils bezogen auf das Acrylatpolymer, und/oder die Verarbeitbarkeit modifizierenden Additive wie Netzmittel, Entschäumer, Entlüfter Verlaufsmittel, Rheologieadditive (Verdicker), vorzugsweise in einer Konzentration zwischen 0,01 und 10 Gew.-Teilen, bevorzugt 0,01 bis 5 Gew.-Teilen, besonders bevorzugt 0,01 bis 3 Gew.-Teilen, jeweils bezogen auf das Acrylatpolymer, enthält.

11. Klebeband nach zumindest einem der vorherigen Ansprüche,
**dadurch gekennzeichnet, dass**
der Masseauftrag der Acrylatmasse auf dem Papierträger zwischen 20 und 200 g/m², vorzugsweise zwischen 25 und 75 g/m², weiter vorzugsweise zwischen 30 und 50 g/m² liegt.

12. Klebeband nach zumindest einem der vorherigen Ansprüche,
**dadurch gekennzeichnet, dass**
das Flächengewicht des Papiers (unter Berücksichtigung einer eventuellen Imprägnierung oder Lackierung mit einem Release) bei 25 bis 250 g/m², bevorzugt bei 40 bis 200 g/m², ganz bevorzugt bei 50 bis 90 g/m² und/oder die Dicke liegt zwischen 50 und 200 µm, bevorzugt zwischen 50 und 90 µm liegt.

13. Klebeband nach zumindest einem der vorherigen Ansprüche,
**dadurch gekennzeichnet, dass**
die Reißdehnung des Papiers zwischen 3 und 8 %, bevorzugt bei 5 bis 7 % liegt.

14. Verwendung eines Klebebands nach zumindest einem der vorherigen Ansprüche als Abdeckband.

## Claims

1. Adhesive tape with a paper backing on one side of which an acrylate adhesive in the form of a dried polymer dispersion has been applied, wherein the acrylate polymer is composed of the following monomers:
a) from 70% by weight to 94.9% by weight of 2-ethylhexyl acrylate
b) from 5% by weight to 25% by weight of methyl methacrylate
c) from 0.1% by weight to 5% by weight of a monomer having carboxy or hydroxy function
d) from 0 to 20% by weight of another monomer different from a), b) and c),
and the adhesive has been chemically crosslinked, where chemical crosslinking agents used comprise di- or polyfunctional aliphatic or aromatic isocyanates, epoxides, carbodiimides, oxazolines, cyclic ureas, carboxylic hydrazides, hydrazines and/or aziridines.

2. Adhesive tape according to Claim 1,
**characterized in that**
from 0 to 5% by weight of a di- or polyfunctional monomer have been added as constituent e) to the acrylate polymer of the acrylate adhesive.

3. Adhesive tape according to Claim 1 or 2,
**characterized in that**
the acrylate polymer of the acrylate adhesive is composed of:
a) from 80 to 94.9% by weight,
b) from 5 to 17% by weight,
c) from 0.1 to 3% by weight,
d) from 0 to 10% by weight,
e) from 0 to 2% by weight.

4. Adhesive tape according to Claim 3,
**characterized in that**
the acrylate polymer of the acrylate adhesive is composed of:
a) from 85 to 94.9% by weight,
b) from 5 to 13% by weight,
c) from 0.1 to 2% by weight,
d) from 0 to 5% by weight,
e) from 0 to 1% by weight.

5. Adhesive tape according to at least one of the preceding claims,
**characterized in that**
monomer c) used comprises acrylic acid, methacrylic acid, itaconic acid, maleic acid, fumaric acid or maleic anhydride or else C₁- to C₁₀-hydroxyalkyl (meth)acrylates such as in particular hydroxyethyl or hydroxypropyl (meth)acrylate, preferably acrylic acid or methacrylic acid.

6. Adhesive tape according to at least one of the preceding claims,
**characterized in that**
the monomer d) is selected from the group of the C₁- to C₄₀-alkyl (meth)acrylates, the monomer d) is an ester of ethylenically unsaturated di- or tricarboxylic acids or anhydrides, for example ethyl maleate, dimethyl fumarate and ethyl methyl itaconate, the monomer d) is a vinylaromatic monomer, preferably styrene, the monomer d) is a vinyl ester derived from carboxylic acids which comprise up to 20 carbon atoms, a vinyl ether derived from alcohols which comprise up to 10 carbon atoms, a vinyl halide, a nitrile, an amide or an unsaturated hydrocarbon having from 2 to 8 carbon atoms.

7. Adhesive tape according to at least one of the preceding claims,
**characterized in that**
the polymer precursor that forms the acrylate polymer takes the form of an aqueous dispersion.

8. Adhesive tape according to at least one of the preceding claims,
**characterized in that**
the acrylate polymer is produced from the polymer precursor by emulsion polymerization.

9. Adhesive tape according to Claim 1,
**characterized in that**
crosslinking agents used comprise diphenylmethane-bis-4,4'-ethyleneurea or trimethylolpropane tris-(N-methylaziridinyl)propionate.

10. Adhesive tape according to at least one of the preceding claims,
**characterized in that**
the acrylate polymer comprises additional substances such as dyes, light stabilizers, antioxidants (primary and secondary), fillers or tackifiers (tackifying resins), preferably at a concentration of from 0.1 to 30 parts by weight with preference from 0.5 to 20 parts by weight, with particular preference from 1 to 10 parts by weight, based in each case on the acrylate polymer, and/or processability-modifying additives such as wetting agents, antifoams, deaerating agents, flow-control agents, or rheology additives (thickeners), preferably at a concentration of from 0.01 to 10 parts by weight, with preference from 0.1 to 5 parts by weight, with particular preference from 0.01 to 3 parts by weight, based in each case on the acrylate polymer.

11. Adhesive tape according to at least one of the preceding claims,
**characterized in that**
the quantity of the acrylate composition applied to the paper backing is from 20 to 200 g/m², preferably from 25 to 75 g/m², more preferably from 30 to 50 g/m².

12. Adhesive tape according to at least one of the preceding claims,
**characterized in that**
the weight of the paper per unit area (including any possible impregnation system or release-coating system) is from 25 to 250 g/m², preferably from 40 to 200 g/m², very preferably from 50 to 90 g/m², and/or the thickness is from 50 to 200 µm, preferably from 50 to 90 µm.

13. Adhesive tape according to at least one of the preceding claims,
**characterized in that**
the elongation at break of the paper is from 3 to 8%, preferably from 5 to 7%.

14. Use of an adhesive tape according to at least one of the preceding claims as masking tape.

## Revendications

1. Bande adhésive comprenant un support en papier, sur lequel une masse adhésive acrylate est appliquée d'un côté sous la forme d'une dispersion de polymère séchée, le polymère d'acrylate étant formé par les monomères suivantes :
a) 70 % en poids à 94,9 % en poids d'acrylate de 2-éthylhexyle,
b) 5 % en poids à 25 % en poids de méthacrylate de méthyle,
c) 0,1 % en poids à 5 % en poids d'un monomère à fonction carboxyle ou hydroxyle,
d) 0 à 20 % en poids d'un autre monomère, qui est différent de a), b) et c),
et la masse adhésive étant réticulée chimiquement,
des isocyanates aliphatiques ou aromatiques di- ou polyfonctionnels, des époxydes, des carbodiimides, des oxazolines, des urées cycliques, des hydrazides d'acides carboxyliques, des hydrazines et/ou des aziridines étant utilisés en tant qu'agents de réticulation chimiques.

2. Bande adhésive selon la revendication 1, **caractérisée en ce que** 0 à 5 % en poids d'un monomère di-ou polyfonctionnel est ajouté au polymère d'acrylate de la masse adhésive acrylate en tant que constituant e).

3. Bande adhésive selon la revendication 1 ou 2, **caractérisée en ce que** le polymère d'acrylate de la masse adhésive acrylate est constitué par :
a) 80 à 94,9 % en poids,
b) 5 à 17 % en poids,
c) 0,1 à 3 % en poids,
d) 0 à 10 % en poids,
e) 0 à 2 % en poids.

4. Bande adhésive selon la revendication 3, **caractérisée en ce que** le polymère d'acrylate de la masse adhésive acrylate est constitué par :
a) 85 à 94,9 % en poids,
b) 5 à 13 % en poids,
c) 0,1 à 2 % en poids,
d) 0 à 5 % en poids,
e) 0 à 1 % en poids.

5. Bande adhésive selon au moins l'une quelconque des revendications précédentes, **caractérisée en ce qu'**en tant que monomère c), de l'acide acrylique, de l'acide méthacrylique, de l'acide itaconique, de l'acide maléique, de l'acide fumarique ou de l'anhydride d'acide maléique, ainsi que des (méth)acrylates d'hydroxyalkyle en C₁ à C₁₀ tels que notamment le (méth)acrylate d'hydroxyéthyle ou d'hydroxypropyle, sont utilisés, de préférence l'acide acrylique ou l'acide méthacrylique.

6. Bande adhésive selon au moins l'une quelconque des revendications précédentes, **caractérisée en ce que** le monomère d) est choisi dans le groupe constitué par les esters alkyliques de l'acide (méth)acrylique en C₁ à C₄₀, le monomère d) est un ester d'acides di- et tricarboxyliques éthyléniquement insaturés et d'anhydrides tels que le maléate d'éthyle, le fumarate de diméthyle et l'itaconate d'éthylméthyle, le monomère d) est un monomère aromatique de vinyle, de préférence le styrène, le monomère d) est un ester vinylique d'acides carboxyliques contenant jusqu'à 20 atomes de carbone, un éther vinylique d'alcools contenant jusqu'à 10 atomes de carbone, un halogénure de vinyle, un nitrile, un amide d'acide ou un hydrocarbure insaturé de 2 à 8 atomes de carbone.

7. Bande adhésive selon au moins l'une quelconque des revendications précédentes, **caractérisée en ce que** le polymère de base, qui forme le polymère d'acrylate, se présente sous la forme d'une dispersion aqueuse.

8. Bande adhésive selon au moins l'une quelconque des revendications précédentes, **caractérisée en ce que** le polymère d'acrylate est fabriqué à partir du polymère de base par polymérisation en émulsion.

9. Bande adhésive selon la revendication 1, **caractérisée en ce que** la diphénylméthane-bis-4,4'-éthylène-urée ou le tris-(N-méthylaziridinyl)propionate de triméthylolpropane est utilisé en tant qu'agent de réticulation.

10. Bande adhésive selon au moins l'une quelconque des revendications précédentes, **caractérisée en ce que** le polymère acrylate contient des additifs tels que des colorants, des agents photoprotecteurs, des antioxydants (primaires et secondaires), des charges ou des agents collants (résines collantes), de préférence en une concentration comprise entre 0,1 et 30 parties en poids, de préférence de 0,5 à 20 parties en poids, de manière particulièrement préférée de 1 à 10 parties en poids, à chaque fois par rapport au polymère d'acrylate, et/ou des additifs modifiant l'usinabilité, tels que des agents mouillants, des antimousses, des agents d'aération, des agents d'étalement, des additifs rhéologiques (épaississants), de préférence en une concentration comprise entre 0,01 et 10 parties en poids, de préférence de 0,01 à 5 parties en poids, de manière particulièrement préférée de 0,01 à 3 parties en poids, à chaque fois par rapport au polymère d'acrylate.

11. Bande adhésive selon au moins l'une quelconque des revendications précédentes, **caractérisée en ce que** la quantité appliquée en masse de la masse acrylate sur le support en papier est comprise entre 20 et 200 g/m², de préférence entre 25 et 75 g/m², de manière davantage préférée entre 30 et 50 g/m².

12. Bande adhésive selon au moins l'une quelconque des revendications précédentes, **caractérisée en ce que** le poids superficiel du papier (en prenant en compte une éventuelle imprégnation ou un éventuel vernissage avec une libération) est de 25 à 250 g/m², de préférence de 40 à 200 g/m², de manière tout particulièrement préférée de 50 à 90 g/m², et/ou l'épaisseur est comprise entre 50 et 200 µm, de préférence entre 50 et 90 µm.

13. Bande adhésive selon au moins l'une quelconque des revendications précédentes, **caractérisée en ce que** l'allongement à la rupture du papier est compris entre 3 et 8 %, de préférence de 5 à 7 %.

14. Utilisation d'une bande adhésive selon au moins l'une quelconque des revendications précédentes en tant que bande de recouvrement.
